Europäisches Patentamt

European Patent Office

Office européen des brevets

(11) Publication number: **0 122 784**
**A1**

# (12) EUROPEAN PATENT APPLICATION

(21) Application number: **84302518.0**

(22) Date of filing: **13.04.84**

(51) Int. Cl.³: **F 16 L 5/00**
**H 02 G 3/22**

(30) Priority: **13.04.83 GB 8310014**

(43) Date of publication of application:
**24.10.84 Bulletin 84/43**

(84) Designated Contracting States:
**AT BE CH DE FR GB IT LI NL SE**

(71) Applicant: **N.V. RAYCHEM S.A.**
**Diestsesteenweg 692**
**B-3200 Kessel-lo(BE)**

(72) Inventor: **Brusselmans, Jacques Hubert Francois**
**Rue Bourgemestre Dandoy 15**
**B-5950 Orp-Jauche Enines(BE)**

(74) Representative: **Benson, John Everett et al,**
**RAYCHEM Intellectual Property Law Department Swan**
**House 37-39, High Holborn**
**London WC1(GB)**

(54) **Feedthrough device.**

(57) A feedthrough device suitable for sealing cables at their points of entry into man-holes, comprises an inner support tube (3) having a raised relief on its outer surface and recoverable tube (1) surrounding the support tube (3). The support tube (3) or the recoverable tube (1) is provided with temporary blocking means (7).

Fig.2.

-1-

# FEEDTHROUGH DEVICE
## DESCRIPTION

This invention relates to feedthrough devices for use in building. This invention also relates to methods for sealing supply lines through a bulkhead, for example, a wall. The term "supply lines" includes for example, gas pipes, water pipes and cables.

In the installation of telecommuniction cables, or of other supply lines, it is frequently necessary to make connections between lengths of lines, and to terminate lines in buildings. It is often convenient to make such connections in an underground junction box, which is referred to as a hand-hole or man-hole, depending on its size. This avoids the need for digging if repair work has to be carried out, and allows such repair work to be carried out under relatively clean conditions. The cable, which may lie in a duct, is introduced through a hole in the wall of the hand-hole or man-hole, and to prevent ingress of water, soil and other undesirable elements, the cable must be sealed within the hole. Sealing can best be achieved if the wall is provided in advance with a feedthrough device. The feedthrough device is sealed within a hole in the wall so the work that must be done in the field reduces to sealing the cable within the feedthrough device; this is much simpler than sealing the cable directly to the wall since the feedthrough device may be provided with some special sealing means. The hand-hole or man-hole may be provided with spare feedthrough devices which must be temporarily blocked while vacant. The same considerations apply to the sealing of supply lines as they enter buildings. If the cable lies in a duct, it is preferred that the duct may also be sealed in the hole.

One method that has been used hitherto to seal a supply line through a wall is described in British Patent No. 1245119, wherein a conduit member, comprising a rigid central portion and end portions of heat-shrinkable material, is sealed into a wall, in such a way that the end portions protrude from the wall. The conduit member may be temporarily blocked by one or more plugs. A supply line is passed through the conduit member, and the end portions are heated to effect shrinking onto the supply line.

We have designed a feedthrough device by means of which, cables may be sealed through walls for example, the walls of a hand-hole, while ingress of water and of other undesirable elements is prevented.

According to one aspect of this invention, there is provided a feedthrough device comprising an inner support tube having a raised relief on its outer surface, a recoverable tube surrounding the support tube over at least part of the length of the support tube and extending past one end thereof, the support tube or the recoverable tube having temporary blocking means.

The present invention also provides a method of sealing a substrate through a bulkhead, which comprises the steps of:

(a) passing a feedthrough device through the bulkhead so that a recoverable first portion of the device projects from the bulkhead, and a second portion of the device lies within the bulkhead comprising a support tube having a circumferentially raised relief on its outer surface;

(b) removing or piercing a temporary blocking means in said feedthrough device;

(c) passing the substrate through said feedthrough device; and

(d) heating the first part of the feedthrough device to cause it sealingly to engage said susbtrate.

The feedthrough device of the invention is particularly useful for sealing an elongate substrate in a wall, for example of a hand-hole or a man-hole, or of a building.

An advantage of the present invention is that the feedthrough device can be installed in a wall when the wall is built, and can be used to block the hole in the wall while vacant. Thus the work that must be done in the field is reduced to sealing the substrate within the feedthrough device.

Another advantage of the invention is that one size of feedthrough device may be used to seal the passage substrates with a range of diameters into the wall, as sealing is achieved by recovering a tube onto the substrate.

By a recoverable tube is meant a tube whose dimensional configuration may be made to change when subjected to an appropriate treatment. Usually such tubes recover towards an original shape from which they have previously been deformed but the term "recoverable", as used herein, also includes an article which adopts a new configuration, even if it has not been previously deformed. The tube may be heat recoverable, such that its dimensional configuration may be made to change when subjected to heat treatment.

In their most common form, such articles comprise a heat-shrinkable sleeve made from a polymeric material exhibiting the property of elastic or plastic memory as described, for example, in U.S. Patents 2,027,962; 3,086,242 and 3,597,372. As it is made clear in, for example, U.S. Patent No. 2,027,962, the original heat-stable form may be a transient form in a continuous process in which, for example, an extruded tube is expanded, whilst hot, to a dimensionally heat-unstable form but, in other applications, a preformed dimensionally heat-stable article is deformed to a dimensionally heat unstable form in a separate stage.

In the production of heat recoverable articles, the polymeric material may be cross-linked at any stage in the production of the article that will enhance the desired dimensional recoverablility. One manner of producing a heat-recoverable article comprises shaping the polymeric material into the desired heat-stable form, subsequently cross-linking the polymeric material, heating the article to a temperature above the crystalline melting point, or for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent No. 1,440,524, an elastomeric member such as an outer tubular member is held in a stretched state by a second member, such as an inner tubular member, which, upon heating weakens and thus allows the elastomeric member to recover.

A further advantage of the invention is that it may be used to seal a ducted supply line through a wall, including the step of sealing the duct in the feedthrough device.

A further aspect of this invention is a hand-hole or man-hole in which is sealed a feedthrough device of the invention.

Yet another advantage of the present invention is that the end of the device may end substantially flush with the exterior surface of the bulkhead, which may be the wall of a hand-hole. Thus the possibility of the feedthrough device being damaged when the hand-hole is installed is reduced.

The invention relates to the sealing of elongate substrates, especially supply lines through a bulkhead. The term "supply lines" includes pipes, for example water pipes and gas pipes, and cables, for example power cables and telecommunications cables.

The internal diameter of the inner support tube of the device is preferably in the range 1.5 to 10 cm, preferably 2 to 8 cm, especially 3.5 to 6 cm.

Any recoverable polymeric material may be used for the tubular cover. Suitable materials include polyolefins, for example polyethylene or polypropylene.

The inner support tube will in general comprise a rigid material, of which PVC is a suitable example. The raised relief on the inner support tube may be provided by a coil which is applied to the outer surface of the tube. This arrangement provides the seal between the wall and the feedthrough device with additional strength, and also provides a longer leak path for the ingress of foreign materials, for example water. In additon, the screw like surface imparted to the support tube by the coil may be used to screw the feedthrough device into a hole which has been drilled or preformed in a bulkhead. A suitable material that can be used for the coil is carbonised steel.

The present invention is further illustrated by the accompanying drawings, in which:

Figure 1 is a section taken along the longitudinal axis of a combination of heat shrinkable tube re-inforcing spring and PVC tubular insert;

Figure 2 is a longitudinal section of a form of tubular feedthough device according to the present invention;

Figure 3 is a section through a wall through which a ducted cable has been sealed according to the method of the present invention;

Figure 4 is a cross section taken along line A-A of Figure 3;

Figure 5 is a section through a mould suitable for the casting of a hand-hole, with feedthrough devices in place;

Figure 6 is a section through a pre cast hand-hole, there being a hole in the wall of said hand-hole suitable for the insertion of a feedthrough device; and

Figure 7 shows a hand-hole with feedthrough devices installed

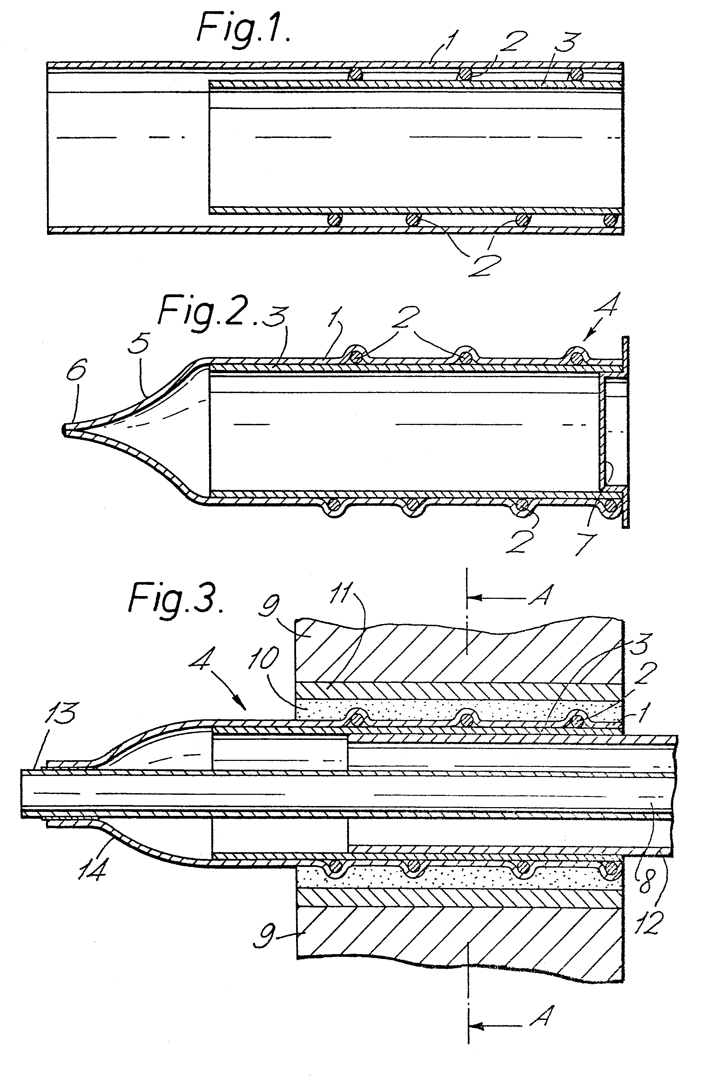

Figure 1 shows a combination comprising a heat-shrinkable tube 1, and inserted in said tube, a metal coil 2, and a tubular PVC insert 3, the longitudinal axes of the coil 2, and of the insert 3, coinciding with that of the tube 1.

An article of the invention as suppled for use is shown in Figure 2, the feedthrough device 4, being formed from the combination of Figure 1. The heat-shrinkable tube 1, is heated to cause it to engage the coil 2, and the insert 3, thereby conferring a screw-like surface to the feedthrough device. The portion 5, of the heat-shrinkable tube 1, which is supported by neither the coil 2, nor the insert 3 is not recovered at this stage, but may be merely flattened at the end 6. The end 6 may be opened by cutting away the seal or by causing the bond to fail. The right hand open end as drawn, may be sealed with a removable or pierceable cap 7. The flattened and sealed end 6 and the cap 7, each constitute examples of the temporary blocking means provided as part of the feedthrough device. Preferably these two types of blocking means are used together to ensure that the inside of the device remains clean before use.

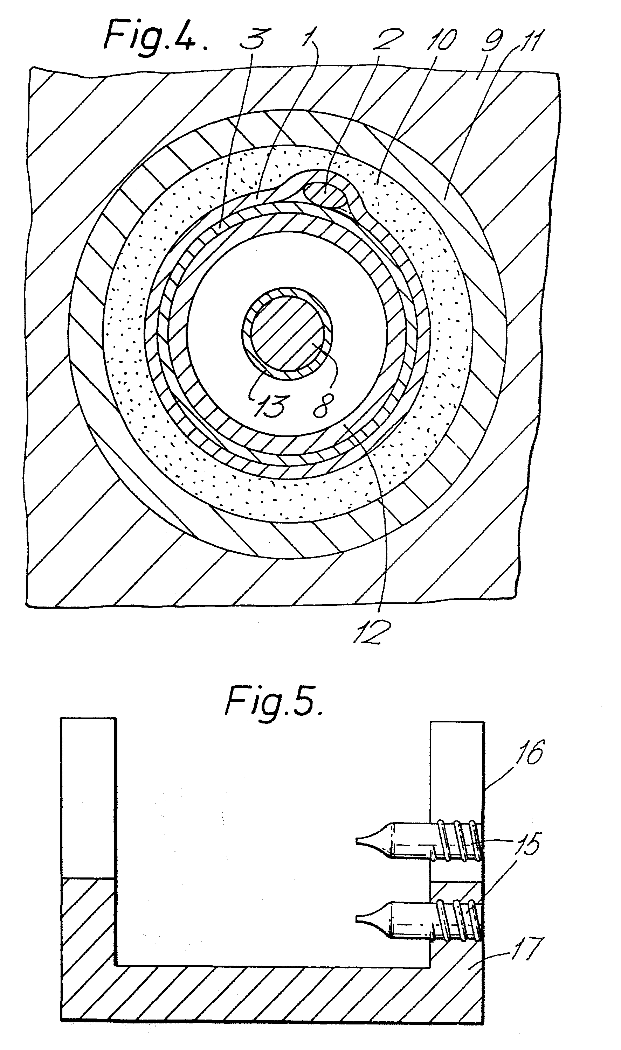

Figures 3 and 4 show how the method of the invention may be used to seal a ducted cable 8 at a wall or other bulkhead 9. A feedthrough device 4,is sealed in the wall 9 by surrounding the portion supported by the spring 2, with an exterior layer 10 of a sealing material such as an adhesive or a sealant (for example, mastic or tar). Where the hole in the wall is much larger than the device 4 or where particular strength is required, the sealing material may comprise a layer 11, of mortar.

Alternatively, the device 4 may be built into the wall during construction. A duct 12, coated with an exterior layer of an adhesive or sealant, is introduced into the open end of the device 4, after removal or piercing of any temporary blocking means, and a cable 8 is passed through the duct. A layer 13, preferably of a water-insoluble sealant, for example a mastic, or of an adhesive such as an epoxy resin, is applied to the exterior surface of the end part of the cable 8, and then the end part of the heat-shrinkable tube, indicated generally at 14, is heated to cause it to shrink and seal to the external surface of the cable 8.

Figure 5 shows how a feedthrough device is installed in a hand-hole, while said hand-hole is being cast. Feedthrough devices 15, are fitted in a suitable mould 16, into which the material consituting the hand-hole for example concrete 17, is poured.

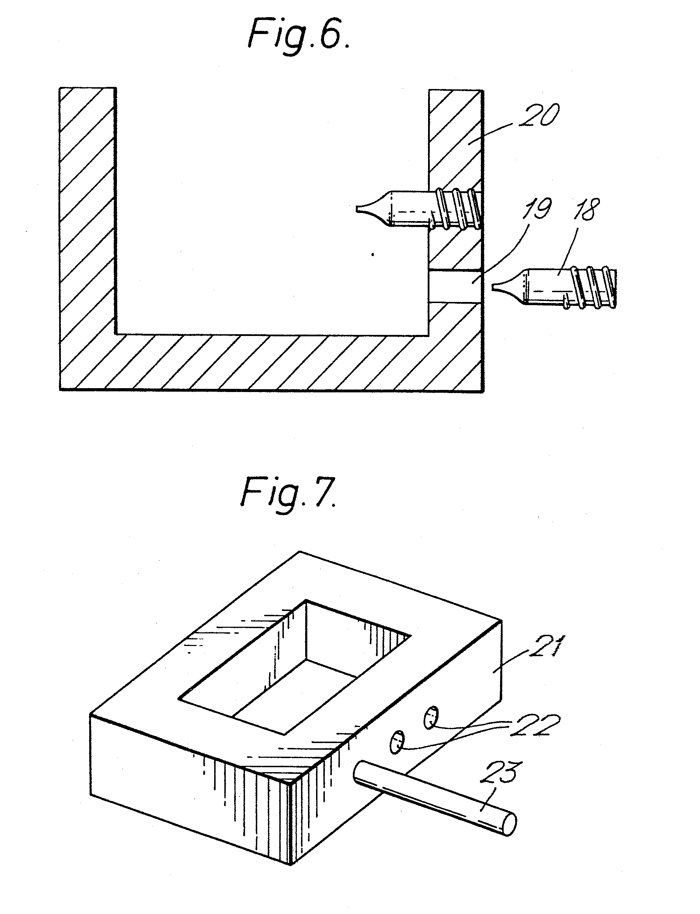

Figure 6 shows how a feedthrough device 18, can be installed in a hole 19, in the wall of a pre-cast hand-hole 25, the hole having been either drilled, or formed during the casting of the hand-hole. The space around the device may be sealed with a suitable filler, for example mortar, or a mastic or a tar.

Figure 7 shows a hand-hole 21 in which feedthrough device 22 are installed, with cables 23 passing through said feedthrough devices, into the hand-hole.

CLAIMS

1. A feedthrough device comprising an inner support tube having a raised relief on its outer surface, a recoverable tube surrounding the support tube over at least part of the length of the support tube and extending past one end thereof, the support tube or the recoverable tube having temporary blocking means.

2. A feedthrough device as claimed in Claim 1, wherein said inner support tube comprises a rigid tubular member, and a helical member placed co-axial with and exterior to said tubular member thereby providing said raised relief, said inner support tube being surrounded along substantially all of its length by the recoverable tube.

3. A feedthrough device as claimed in Claim 1 or Claim 2, wherein said blocking means comprises a removable or pierceable plug.

4. A feedthrough device as claimed in any preceding claim, wherein said blocking means is provided by bonding

5. A feedthrough device as claimed in any preceding claim, wherein said recoverable tube extends from a first end of the support tube, past a second end of the support tube, the first end of the support tube being blocked with a removable or pierceable plug, and the end of the recoverable tube remote from the first end being bonded closed.

6. A feedthrough device as claimed in any preceding claim, wherein said recoverable tube is recovered over the raised relief such that the relief is imparted to the recovered tube.

0122784

7. A feedthrough device as claimed in any preceding claim, wherein the inner surface of the recoverable tube is coated with a sealing material comprising a mastic or an adhesive.

8. A method of sealing a substrate through a bulkhead which comprises the steps of:

(a) passing a feedthrough device through the bulkhead so that a recoverable first portion of the device projects from the bulkhead, and a second portion of the device lies within the bulkhead comprising a support tube having a circumferentially raised relief on its outer surface.

(b) removing or piercing a temporary blocking means in said feedthrough device;

(c) passing the substrate through said feedthrough device; and

(d) heating the first part of the feedthrough device to cause it sealingly to engage said substrate.

9. A method as claimed in Claim 8, including the additional step of sealing the feedthrough device into the bulkhead by means of a layer of sealing material, comprising a mastic or an adhesive.

10. A method as claimed in Claim 8 or Claim 9, including the additional step of sealing the substrate into the feedthrough device by means of a layer of a sealant material comprising a mastic or an adhesive.

11. A method as claimed in any of Claims 8 to 10, wherein the substrate is a cable or a ducted cable.

12.    A method as claimed in any of Claims 8-11, wherein the bulkhead is the wall of a hand-hole or man-hole.

13.    A method as claimed in any of Claims 8 to 12, wherein the second portion of the device ends substantially flush with the exterior surface of the bulkhead.

14.    A hand-hole or man-hole in which is sealed a feedthrough device, as claimed in any of Claims 1 to 7.

15.    A hand-hole or man-hole having a cable sealed through one of its walls by a method as claimed in any of Claims 8-13.

**Fig.1.**

**Fig.2.**

**Fig.3.**

## Fig.4.

## Fig.5.

Fig.6.

Fig.7.

European Patent
Office

**EUROPEAN SEARCH REPORT**

**0122784**

Application number

| | DOCUMENTS CONSIDERED TO BE RELEVANT | | EP 84302518.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>DE - A1 - 2 336 236</u> (W. HAUFF) <br> * Totality * <br><br> -- | 1,5 | F 16 L 5/00 <br> H 02 G 3/22 |
| A | <u>FR - A - 2 197 139</u> (RAYCHEM CORP.) <br> * Fig. 1-4 * <br><br> -- | 1,5 | |
| D,A | <u>GB - A - 1 440 524</u> (RAYCHEM CORP.) <br> * Totality * <br><br> -- | 1 | |
| D,A | <u>GB - A - 1 245 119</u> (RAYCHEM CORP.) <br> * Fig. 3,4 * <br><br> ---- | 1 | |

| | TECHNICAL FIELDS SEARCHED (Int. Cl. ³) |
|---|---|
| | F 16 L 5/00 <br> F 16 L 7/00 <br> F 16 L 9/00 <br> F 16 L 13/00 <br> F 16 L 25/00 <br> H 02 G 3/00 <br> H 02 G 15/00 <br> B 32 B 1/00 |

The present search report has been drawn up for all claims

| Place of search | Date of completion of the search | Examiner |
|---|---|---|
| VIENNA | 04-07-1984 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82